# EUROPEAN PATENT APPLICATION

(11) **EP 4 686 648 A1**
(43) Date of publication of application: **04.02.2026**
(21) Application number: 24382836.5
(22) Date of filing: 30.07.2024
(51) Int. Cl.: B64C 1/14, B64D 1/06, E06B 3/48, E06B 5/12

(54) **ROLLING DOOR SYSTEM OF AN OPENING OF AN AIRCRAFT FUSELAGE**

(71) Applicant: AIRBUS OPERATIONS, S.L.U., 28906 Getafe (Madrid) (ES)
(72) Inventor: MIRA RÍOS, Antonio, 28906 Getafe, Madrid (ES); FERNÁNDEZ RAMÍREZ, Ana, 28906 Getafe, Madrid (ES)
(74) Representative: Elzaburu S.L.P.

(57) **Abstract**

Rolling door system of an opening (100) of an aircraft fuselage, the rolling door system comprising:
- a plurality of panels (1) adjacent to each other in at least a longitudinal direction, the plurality of panels (1) having a first longitudinal end (1.1) longitudinally movable over the opening (100) and a second longitudinal end (1.2),
- a plurality of hinges (2), each hinge (2) located between two consecutive panels (1),
- a driving means in connection with at least one panel (1) of the plurality of panels (1), the driving means actuating the plurality of panels (1) jointly along the longitudinal direction so as to open or close the opening (100),
- a transversal rotatable shaft (3) joined to the second longitudinal end (1.2) of the plurality of panels (1), at least part of the panels (1) of the plurality of panels (1) rolling around the transversal rotatable shaft (3).

## Description

### FIELD OF THE INVENTION

The present invention relates to door systems of an opening of an aircraft fuselage. Specifically, it is intended for collecting and conducting air to an inlet of an aircraft system.

### BACKGROUND OF THE INVENTION

Some RAM Air Inlets (RAI) comprise two doors or flaps joined by hinges and two bars connected to the driving means. The kinematic of the doors is controlled by an actuator-balancer-transmission bar link that has an articulated joint with the doors for its opening and closing.

There are also other types of inlets that comprise a single flap and a central shaft that rotates by means of bearings.

The current door systems may be affected by aerodynamic and aircraft vibrations, thus a more robust and simpler door system is sought.

### SUMMARY OF THE INVENTION

It is an object of the invention a rolling door system of an opening fuselage. The opening may be an inlet or an outlet of an aircraft fuselage. The rolling door system is rolled in a longitudinal direction to open or close the opening. Thus, it is understood for this invention the longitudinal direction or axis as the rolling direction. Consequently, the transversal direction or transversal axis would be the direction perpendicular to the longitudinal direction.

The rolling door system object of the invention comprises:
- A plurality of panels located adjacent to each another in at least a longitudinal direction. The plurality of panels has a first longitudinal end longitudinally movable over the opening and a second longitudinal end.
- A plurality of hinges located between two consecutive panels, so that they are articulated.
- A driving means in connection with at least one panel of the plurality of panels. The driving means being configured to actuate the plurality of panels jointly along the longitudinal direction so as to open or close the opening.
- A transversal rotatable shaft joined to the second longitudinal end of the plurality of panels. At least part of the plurality of panels is configured to roll around the transversal rotatable shaft.

The term in connection with has to be understood in this application as both directly linked or linked through an intermediate element.

As previously stated, the claimed invention may be applied to a RAM Air Inlet or Outlet for aircraft so that the door system can be rolled up. Another application is a protection door for Foreign Object Debris (FOD) inlets, to prevent any foreign object from entering the inlet, especially on ground.

The main advantages of the claimed invention are as follows:
- It increases fatigue strength of the door system because the door system offers a much smoother aerodynamic flow, reducing aerodynamic vibrations that are directly related to the level of fatigue to be endured.
- It simplifies the design with small, actuated components and it provides fewer different kinds of elements involved, as it comprises the same elements, panels and hinges, repeated and joined together.
- It reduces door vibration, because the different components of the rolling door system allow less gap between them and therefore, less vibration level.
- It reduces or suppresses unsteady aerodynamics.
- It saves weight, approximately 5 kg/opening.
- It increases the production rate, due to its simplified mechanism.
- It reduces maintenance tasks because the rolling door system has small components, and it is easier to install/uninstall.
- It allows an easy opening regulation.

### DESCRIPTION OF THE FIGURES

To complete the description and to provide for a better understanding of the invention, drawings are provided. Said drawings form an integral part of the description and illustrate preferred embodiments of the invention. The drawings comprise the following figures.
Figure 1 shows a lateral view of a schematic representation of an embodiment of a rolling door system.
Figure 2 shows a lateral view of a schematic representation of another embodiment of a rolling door system.
Figure 3 shows a lateral view of the embodiment of the rolling door system of figure 1 in a rolled position.
Figure 4 shows a perspective view of a schematic representation of an embodiment of a rolling door system in a first position in which the door system covers the opening of the inlet or outlet in a fuselage aircraft and in a second position in which the door system does not cover the opening that remains open.
Figure 5 shows a perspective view and a lateral view of another embodiment of the rolling door system comprising rails.
Figure 6 shows a perspective view of an embodiment of a driving system.
Figure 7 shows a perspective view of another embodiment of a driving system.
Figure 8 shows a perspective view of an embodiment that reinforces the door system against buckling.

### DETAILED DESCRIPTION OF THE INVENTION

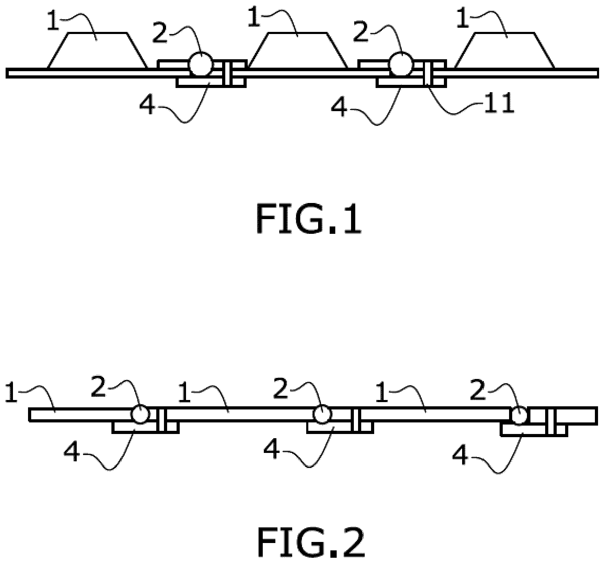

Figures 1 and 2 disclose two different embodiments of the claimed invention.

The claimed rolling door system comprises:
- a plurality of panels (1) adjacent to each other in at least a longitudinal direction, the plurality of panels (1) having a first longitudinal end (1.1) longitudinally movable over the opening (100) and a second longitudinal end (1.2),
- a plurality of hinges (2) located between two consecutive panels (1),
- a driving means in connection with at least a panel (1) configured to actuate the plurality of panels (1) jointly along the longitudinal direction so as to open or close the opening (100). Thus, when the driving means is actuated, the plurality of panels (1) are jointly moved along the longitudinal direction so as to open or close the opening (100),
- a transversal rotatable shaft (3) joined to the second longitudinal end (1.2) of the plurality of panels (1), at least a part of the plurality of panels (1) being configured to roll around the transversal rotatable shaft (3).

Figure 1 discloses that the panels (1) are composite panels, preferably sandwich panels. Figure 2 discloses metal panels. Metal panels have the advantage that help to make the roll of panels (1) more compact than in the sandwich case.

In the shown embodiments, the rolling door system comprises a plurality of sealing elements (4) located covering the longitudinal ends of two consecutive panels (1) at least in a closed position of the rolling door system. Therefore, the gap existing between two consecutive panels (1) that allows the location of the hinge (2) is covered by a sealing element (4).

In the shown embodiment, the sealing element (4) is located on the side of the plurality of panels (1) that is configured to be located exposed to the aerodynamic flow, i.e., the outside of the aircraft fuselage. Consequently, each hinge (2) area would have a seal that improves insulation and allows no leakage.

In the shown embodiment, the sealing element (4) comprises an elongated sealant body that is attached along the longitudinal end of one of the consecutive panels (1) and rests on the adjacent consecutive panel (1) to allow rotation of the rolling door system.

Known two door systems cause less regular aerodynamic flow when are located in a closed configuration. When closed, the hinge (2) blocks the flow which causes non-stationary aerodynamic forces. The claimed system allows the aerodynamic flow to have a smoother passage.

In the embodiment disclosed in figure 1 with composite panels (1), the leaves of the hinge (2) are located on the side of the panels (1) that is not exposed to the aerodynamic flow, thus, towards the inside of the fuselage.

In the figures the sealing element (4) and the hinge (2) are attached by a fastener (11).

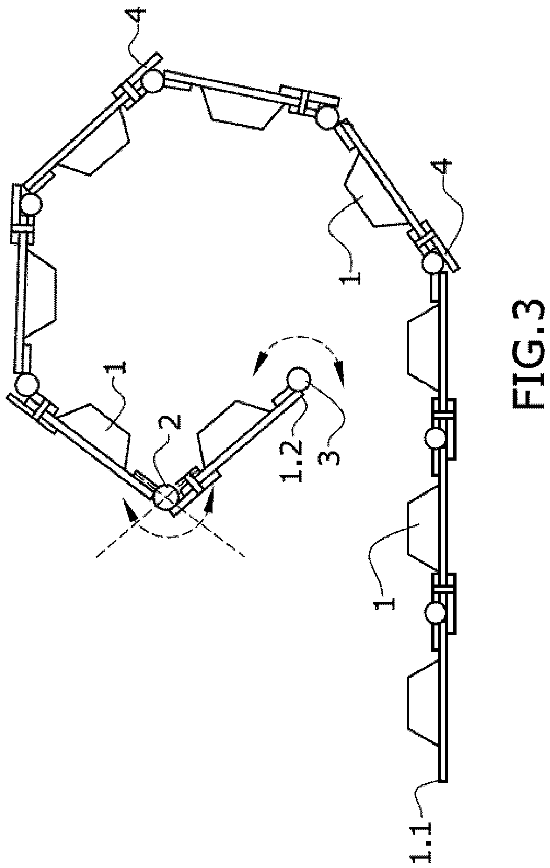

Figure 3 discloses the embodiment of figure 1 in a partially rolled position. The panels (1) are rolled over the transversal rotatable shaft (3) which is joined to the second longitudinal end (1.2).

In order to be able to roll and unroll the rolling door system, it is necessary that each hinge (2) has the rotation restricted for a certain angle. The limited angle of rotation depends on the panel (1) size. Thus, the plurality of hinges (2) comprises means to limit their angle of rotation. In case of a metal or solid laminate design, this angle would be closed to 180° as no clash between panels (1) would be expected.

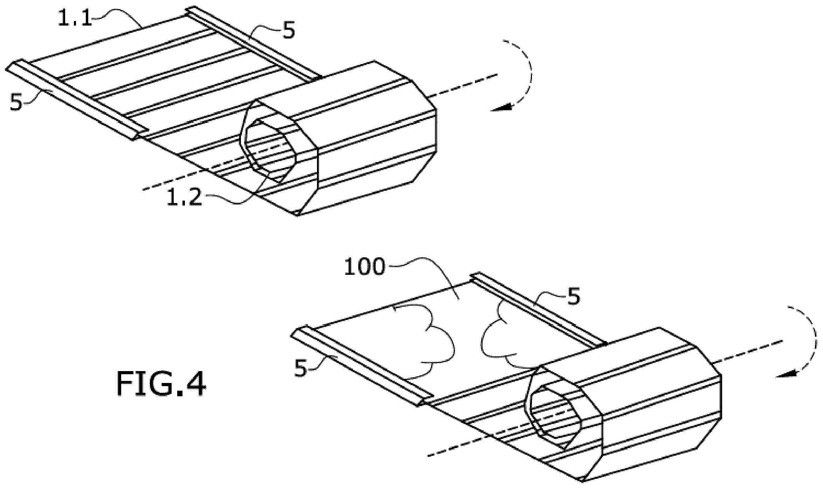

Figure 4 discloses an opening (100), the rolling door system being rolled in a longitudinal direction to open or close the opening (100). The first longitudinal end (1.1) is longitudinally movable over the opening (100) while the second longitudinal end (1.2) is joined to the transversal rotatable shaft (3).

Figure 4 also discloses two rails (5) located in a longitudinal direction of the rolling door system, adjacent to the opening (100) and in connection with the two transversal ends of the plurality of panels (1) so that the plurality of panels (1) is movable with respect to the rails (5). The transversal ends are the ends of the plurality of panels (1) that are perpendicular to the first longitudinal end (1.1) and the second longitudinal end (1.2).

The opening (100) is an inlet or outlet of the fuselage, and the door is configured to cover said opening (100). The rails (5) are located in the aircraft panel fuselage.

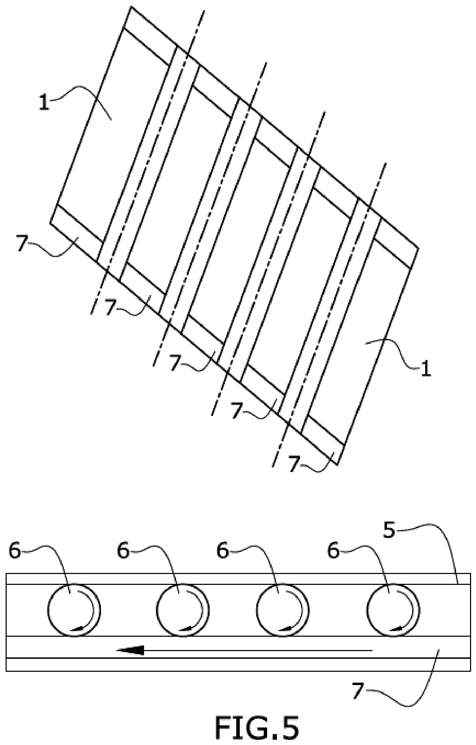

Figure 5 discloses an embodiment in which the rails (5) comprise wheels (6) so that the transversal ends of the plurality of panels (1) slide with respect to the wheels (6). The wheels (6) are located inside the longitudinal rails (5) to allow the sliding performance.

In addition, the rolling door system comprises a pad (7) located in the transversal ends of the plurality of panels (1) for its reinforcement. Said pads (7) reinforce the zone in contact with the wheels (6). Thus, the rolling door system can roll with no danger for the material, for instance, the composite material, as the rail (5), wheels (6) and pads (7) have a continuous contact with no gaps and the friction reinforces the rolling door system.

In an embodiment, the pads (7) form an integral element with the panel (1). Thus, the pads (7) and the panel are the same body. Specifically, the metal panels (1) comprise a pad (7) integrated so that they are part of the same metallic body.

The pads (7) also must have a treatment or material that ensures no damage will appear with the contact between rail (5) and the pad (7) caused by friction. For instance, a treatment for the metal or glass fibre coating the composite.

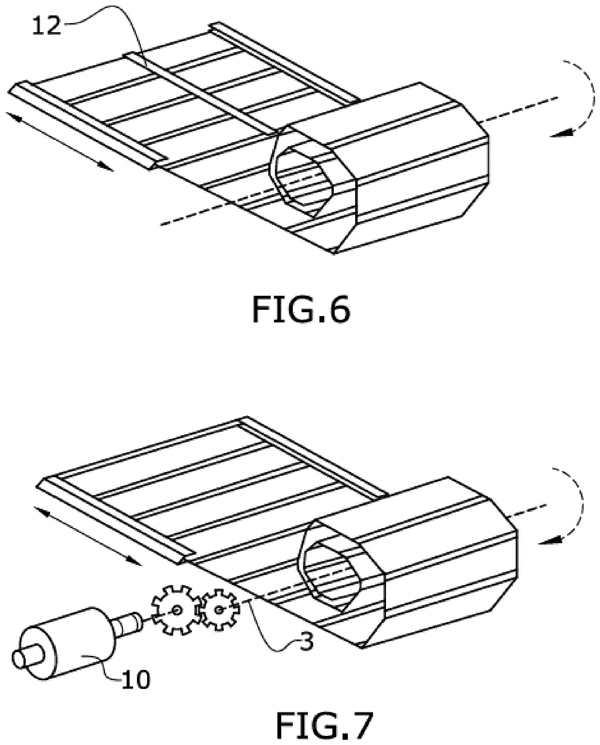

Figure 6 discloses an embodiment in which the rolling door system comprises a stiffener (12) having an elongated body located along the longitudinal direction of the rolling door system. This stiffener (12) may preferably be located at the centre of the transversal dimension of the panels (1) to avoid buckling of the panels (1). The stiffener (12) prevents the panels from bending in the event of a specific strong force applied to them, in particular an aerodynamic force.

The stiffener (12) is located on the side of the panels (1) that is not exposed to the aerodynamic flow, thus, towards the inside of the fuselage. The installation of the stiffener (12) requires play between the panels (1) and the additional rail. This gap would be the minimum possible in order to allow the movement of the plurality of panels (1) but would also work as a stiffener of the panels (1) in case of bending. The stiffener (12) may or may not have wheels located between the stiffener (12) and the panels (1).

Figure 7 discloses another embodiment of the driving means comprising a motor and a gear assembly (10) in connection with the transversal rotatable shaft (3) for its rotation.

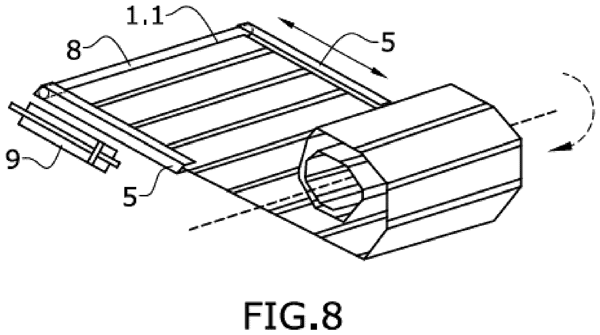

Figure 8 discloses a first embodiment of the driving means for the opening and closing of the rolling system.

The driving means comprises a linear actuator (9) and a guide bar (8) in connection with the linear actuator (9) and with one panel (1) of the plurality of panels (1) for its longitudinal movement. Specifically, in the shown embodiment, the guide bar (8) is in connection with the first end (1.1) of the plurality of panels (1). The guide bar (8) pushes the panel (1) when the door system is in its closed position over the opening (100) and pulls to unfold the plurality of panels (1) to close the opening (100).

In an embodiment, the two ends of the guide bar (8) are located within the rails (5) so that the guide bar (8) slides with respect to the rails (5).

## Claims

1. Rolling door system of an opening (100) of an aircraft fuselage, the rolling door system comprising:
- a plurality of panels (1) adjacent to each other in at least a longitudinal direction, the plurality of panels (1) having a first longitudinal end (1.1) longitudinally movable over the opening (100) and a second longitudinal end (1.2),
- a plurality of hinges (2), each hinge (2) located between two consecutive panels (1),
- a driving means in connection with at least one panel (1) of the plurality of panels (1), the driving means being configured to actuate the plurality of panels (1) jointly along the longitudinal direction so as to open or close the opening (100),
- a transversal rotatable shaft (3) joined to the second longitudinal end (1.2) of the plurality of panels (1), at least part of the panels (1) of the plurality of panels (1) being configured to roll around the transversal rotatable shaft (3).

2. Rolling door system, according to claim 1, wherein the panels (1) are made of composite material or metallic material.

3. Rolling door system, according to any preceding claim, wherein it comprises a plurality of sealing elements (4), the sealing elements (4) being located so as to cover the longitudinal ends of two consecutive panels (1) at least in a closed position of the rolling door system.

4. Rolling door system, according to claim 3, wherein the sealing elements (4) are located on the side of the plurality of panels (1) configured to be exposed to the aerodynamic flow.

5. Rolling door system, according to claim 3 or 4, wherein each sealing element (4) comprises an elongated sealant body attached along the longitudinal end of one of the consecutive panels (1) and resting on the adjacent consecutive panel (1).

6. Rolling door system, according to any preceding claim, wherein the plurality of hinges (2) comprises means to limit their angle of rotation.

7. Rolling door system, according to any preceding claim, wherein it comprises two rails (5) configured to be located in a longitudinal direction of the rolling door system adjacent to the opening (100) and in connection with the two transversal ends of the plurality of panels (1) so that the plurality of panels (1) is movable with respect to the rails (5).

8. Rolling door system, according to claim 7, wherein the rails (5) comprise wheels (6) so that the transversal ends of the plurality of panels (1) slide with respect to the wheels (6).

9. Rolling door system, according to claim 7 or 8, wherein it comprises a pad (7) located at the transversal ends of the plurality of panels (1) for the reinforcement of the panels (1).

10. Rolling door system, according to claim 9, wherein the pads (7) are integral with the panels (1).

11. Rolling door system, according to any preceding claim, wherein it comprises a stiffener (12) having an elongated body located the longitudinal direction of the rolling door system.

12. Rolling door system, according to any preceding claim, wherein the driving means comprises a linear actuator (9) and a guide bar (8) in connection with the linear actuator (9) and with one panel (1) of the plurality of panels (1) for its longitudinal movement.

13. Rolling door system, according to any preceding claim, wherein the driving means comprises a motor and a gear assembly (10) in connection with the transversal rotatable shaft (3) for its rotation for the longitudinal movement of the plurality of panels (1).
